Europäisches Patentamt

European Patent Office

Office européen des brevets

(11) Publication number: **0 035 463 B1**

# EUROPEAN PATENT SPECIFICATION

(45) Date of publication of patent specification: **27.12.84**

(21) Application number: **81630012.3**

(22) Date of filing: **02.02.81**

(51) Int. Cl.³: **F 16 D 69/02**

(54) Organic-type brake linings free of asbestos.

(30) Priority: **28.02.80 US 125420**

(43) Date of publication of application:
**09.09.81 Bulletin 81/36**

(45) Publication of the grant of the patent:
**27.12.84 Bulletin 84/52**

(84) Designated Contracting States:
**DE FR GB IT SE**

(56) References cited:
**EP-A-0 000 839**
**EP-A-0 000 840**
**EP-A-0 000 841**
**FR-A-2 129 510**
**FR-A-2 270 336**
**US-A-3 853 572**
**US-A-3 948 364**

(73) Proprietor: **GOODYEAR AEROSPACE**
**CORPORATION**
**1210 Massillon Road**
**Akron, OH 44315 (US)**

(72) Inventor: **Mianowski, Henry Stanley**
**2876 Erie Drive**
**Akron Ohio 44313 (US)**
Inventor: **Nelson, John Paul**
**1445 Elm Grove Avenue**
**Akron Ohio 44312 (US)**

(74) Representative: **Weyland, Joseph Jean Pierre**
**Goodyear International Tire Technical Center**
**Patent Department Avenue Gordon Smith**
**L-7750 Colmar-Berg (LU)**

## Description

### Background of the Invention

This invention relates to brake disc linings of the organic-type being a composition of carbonaceous material and metallic powders integrally admixed and having a complete absence of asbestos.

Heretofore, for the past several decades, the organic-type brake lining has included asbestos for its heat resistant and fibrous properties. Organic-type brake linings as distinguished from carbon or metallic brake discs or linings traditionally included asbestos, metallic powders and various resins, fillers, and abrasive particles to provide satisfactory wear resistance while also providing adequate frictional characteristics for the intended use of the lining in brake surfaces, clutch surfaces, and other analogous requirements known to those skilled in the art.

Within the last decade, it has become increasingly clear that the use of asbestos in manufacturing and production, as well as its intended use, can be detrimental to the health of human beings. Asbestos has been characterized as a carcinogenic material, and the type and size of fibers are a major source of concern to industry and consumers. Increasingly, the use of asbestos has been restricted, and significant precautionary steps must be taken to prevent its carcinogenic properties from affecting the personnel of manufacturers and the consumers like. Governmental regulations have limited the use of asbestos in a wide variety of applications. By definition, asbestos is characterized as the fibrous form of actinolite, composed of fibrous magnesium or calcium silicate.

Because the art of organic-type brake surface linings has traditionally relied upon asbestos as a necessary component, and because asbestos is recognized as a dangerous compound to the health of human beings, it is necessary to find a composition for the organic-type brake linings which maintains or improves the properties of the linings while eliminating the asbestos material therefrom. Such attempts have been made in the prior art, see for example EP—A—0000839, EP—A—0000840 and EP—A—0000841.

### Objects of the Invention

Consequently, it is an object of the invention to provide an organic-type brake lining having eliminated asbestos, a previously significant component now recognized as a carcinogen.

It is another object of the invention to provide an organic-type brake lining as above, where the substituted materials for asbestos provide comparable or improved wear resistant and frictional properties.

Yet another object of the invention is to provide an organic brake type lining, as above, wherein the composition may replace traditional organic-type brake disc linings in frictional lining applications.

These and other objects of the invention, which will become more apparent as the detailed description of the preferred embodiment proceeds, are achieved by a brake lining of the organic type, such as described by the characterising portion of claim 1. It is to be noted that US—A—3853572 describes the use of powder metal mixes containing carbonaceous material. However, this patent relates to metallic sintered brake disc linings as opposed to the linings of the present invention which make use of organic binders.

### Description of the Drawings

For an appreciation of the use of the organic-type brake disc lining of this invention, reference is had to the following drawing, wherein:

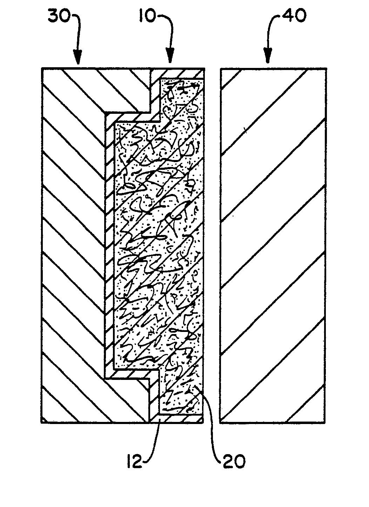

The figure is a cross-sectional view of braking surface module showing the brake lining of the present invention.

### Detailed Description of the Preferred Embodiments

For an understanding of the preferred application the organic-type brake lining of the present invention, reference is had to the figure. A braking surface module, generally shown as 10, is mounted on stationary member 30 by methods such as rivets, adhesives, welding and the like, known to those skilled in the art. Module 10 is designed as a stationary unit to contact an opposing rotating frictional brake disc 40. The braking surface module 10 and disc 50 may exist in pairs, or in a brake disc stack known to those skilled in the art. Braking surface module 10 is composed of housing 12 and organic-type brake lining 20 of the present invention, in the form of a wear-resistant pad used to contact the opposing frictional brake discs. The application of the composition of the organic-type brake linings is not limited to brake disc art, but may be used for clutch surfaces, or any other application known to those skilled in the art demanding significant wear resistance and frictional properties.

The composition of the organic-type brake disc lining 20 of the present invention is a radical departure from the traditional organic-type brake lining. As described above, the organic type brake lining has traditionally been formed from a combination of asbestos with other materials typically metallic powders, resins, fillers and abrasive particles. Brake lining 20 of the present invention eliminates asbestos as a material component for the health and safety reasons described above without a loss of performance properties. The traditional organic-type brake lining composition was typically about 40 percent of asbestos, about 25 percent of metallic powders, and about 35 percent of conventional resins, conventional fillers, and conventional abrasive particles.

The organic-type brake lining 20 of the present invention has carbonaceous material integrally admixed therein from about 10 percent to about 80 percent of the entire lining composition. Preferably, the carbonaceous material comprises about 40 percent of the lining composition. Furthermore, the organic-type brake lining of the present invention has metallic powders comprising from about 10 percent to about 70 percent of the lining composition. Preferably, the metallic powders comprise about 25 percent of the composition of lining 20. Finally, the conventional materials of lining 20 are resins, fillers, and abrasive particles comprising from about 10 to about 50 percent of the lining composition. Conventional resins typically include furan resins and phenolic resins. Typical fillers known to those in the art include calcium carbonate and clay. Conventional abrasive particles are silicon carbide and aluminum oxide. These conventional materials are well known to those skilled in the art, and the area of the invention does not relate to preferences of composition and concentration therewithin.

The carbonaceous material of the present invention may include, graphite, carbon fiber, coat tar pitch chars, oil pitch chars, resin chars, or any bulk carbon or particulate carbon alone or in combination with other carbonaceous material, capable of being pyrolized and made into a wear resistant material having frictional properties. The metallic powders of the present invention may be elemental metals or alloys and may include bronze, iron, copper, zinc, and tin.

It is apparent from the figure that lining 20 is composed of materials integrally admixed therein. The carbonaceous material, metallic powders, resins, fillers, and abrasive particles are mixed and sintered according to procedures well known to those skilled in the art. The entire thickness of lining 20 is bereft of incongruities.

To determine whether the composition of the present invention has successfully replaced the traditional composition of organic-type brake lining having asbestos, "50 stop" brake disc tests were conducted, with the only deviation being the substitution of asbestos in the composition of the traditional brake lining with carbonaceous material in the preferred composition of the brake lining of the present invention. Table I summarizes the results of this brake test comparison.

Table I

Brake Test Summary 50 Stop Test

|  | Traditional Organic Brake Lining Containing Asbestos | Organic Brake Lining Without Asbestos |
|---|---|---|
| Kinetic energy | 1122J | 1122J |
| Temperature rise | 418°C | 462°C |
| Brake pressure | 32.2 bar | 34.06 bar |
| Stop time | 12.75 secs. | 12.7 secs. |
| Coefficient | .291 | .287 |
| Torque | 752 | 722 |
| Peak torque | 1160 | 1210 |
| Total lining wt. loss | 45.4 gms. | 36.0 gms. |
| Total lining wear | 1.0 cm. | 0.67 cm. |
| Wear/face/stop | .0034 cm. | .0026 cm. |
| Disc wt. loss | 31.8 gms. | 10.3 gms. |
| Disc thickness loss | 0.15 cm. | .00064 cm. |

It is apparent from the comparison of the traditional organic brake lining and the brake lining of the present invention that the elimination of asbestos does not impair the physical and chemical properties of the lining. While the stop time remained virtually identical, and the coefficient was very similar, the organic brake lining of the present invention unexpectedly improved the wear characteristics, reducing wear as seen by comparison of total lining wear, total lining weight loss, wear/face/stop, disc weight loss and disc thickness loss. Therefore, it is apparent that the organic brake disc lining of the present invention is synonymous with, or superior to, the traditional organic brake linings containing asbestos. The elimination of asbestos does not materially affect the performance of the organic brake linings, but removes a component serious to the health and safety of human beings. The fibrous nature of asbestos is difficult to control both during manufacture and lining wear during use. The elimination of asbestos eliminates the detrimental health conditions of production or use of the traditional organic linings in closed environments.

While the "50 stop" test compares lining compositions, it was also determined that, against lining 20 of the present invention, the opposing frictional brake disc 40 had improved wear life with no degradation in other performance characteristics. Therefore improved overall braking performance is achieved by linings 20 having the composition of the present invention.

## Claims

1. Brake disc lining of the organic type, being a composition of carbonaceous material and metallic powders integrally admixed and having a complete absence of asbestos, characterised in that the carbonaceous material is selected from the group consisting of graphite, carbon fiber, coal tar pitch chars, oil pitch chars, resin chars, bulk carbon, and particulate carbon, wherein the amount of carbonaceous material ranges from 10 percent to 80 percent by weight of said composition, and wherein the amount of said metallic powders ranges from 10 percent to 70 percent by weight of said composition, and wherein said metallic powders are elemental metals or alloys selected from the group consisting of iron, copper, tin, zinc, bronze, and combinations thereof.

2. A brake disc lining according to Claim 1, characterised in that the carbonaceous material is selected from the group consisting of graphite, coal tar pitch char, oil pitch char, bulk carbon, particulate carbon, resin char, and combinations thereof.

3. A brake disc lining according to Claim 1, characterised in that the carbonaceous material comprises about 40 percent by weight of said composition.

4. A brake disc lining according to Claim 3, characterised in that the metallic powders comprise about 25 percent by weight of said composition.

## Revendications

1. Garniture de disque de frein du type organique, constituée d'une composition de matière carbonée et de poudres métalliques qui y sont intégralement mélangées, avec une absence complète d'amiante, caractérisée en ce que la matière carbonée est choisie parmi le groupe comprenant le graphite, les fibres de carbone, les charbons de brai de goudron de houille, les charbons de brai d'huile, les charbons de résines, le carbone en vrac et le carbone en particules, la quantité de matière carbonée se situant dans l'intervalle de 10% à 80%, calculés sur le poids de la composition, tandis que la quantité des poudres métalliques se situe dans l'intervalle de 10% à 70%, calculés sur le poids de la composition, les poudres métalliques étant des métaux élémentaires ou leurs alliages choisis parmi le groupe comprenant le fer, le cuivre, l'étain, le zinc, le bronze et leurs combinaisons.

2. Garniture de disque de frein suivant la revendication 1, caractérisée en ce que la matière carbonée est choisie parmi le groupe comprenant le graphite, le charbon de brai de goudron de houille, le charbon de brai d'huile, le carbone en vrac, le carbone en particules, le charbon de résine et leurs combinaisons.

3. Garniture de disque de frein suivant la revendication 1, caractérisée en ce que la matière carbonée constitue environ 40% en poids de la composition.

4. Garniture de disque de frein suivant la revendication 3, caractérisée en ce que les poudres métalliques constituent environ 25% en poids de la composition.

## Patentansprüche

1. Bremsscheibenbelag des organisches Typs aus einem kohlenstoffhaltigen Material und Metallpulvern in integraler Mischung ohne Asbest, dadurch gekennzeichnet, daß das Kohlenstoffhaltige Material aus der Gruppe ausgewählt ist, die aus Graphit, kohlefasern, Kohleteerpech, Kohle, Ölpechkohle, Harzkohle, massivem Kohlenstoff und in Form von Einzelteilchen vorliegendem Kohlenstoff besteht, wobei die Menge des kohlenstoffhaltigen Materials von 10 bis 80 Gew.-% der Masse schwankt und die Menge des Metallpulvers zwischen 10 und 70 Gew.-% der Masse variiert, und wobei die Metallpulver aus elementaren Metallen oder Legierungen bestehen, ausgewählt aus der Gruppe, die aus Eisen, Kupfer, Zinn, Zink, Bronze sowie Kombinationen davon besteht.

2. Bremsscheibenbelag gemäß Anspruch 1, dadurch gekennzeichnet, daß das kohlenstoffhaltige Material aus der Gruppe ausgewählt ist, die aus Graphit, Kohleteerpechkohle, Ölpechkohle, massivem Kohlenstoff, in Form von Einzelteilchen vorliegendem Kohlenstoff, Harzkohle sowie Kombinationen davon besteht.

3. Bremsscheibenbelag gemäß Anspruch 1, dadurch gekennzeichnet, daß das kohlenstoffhaltige Material ungefähr 40 Gew.-% der Masse ausmacht.

4. Bremsschiebenbelag gemäß Anspruch 3, dadurch gekennzeichnet, daß die Metallpulver ungefähr 25 Gew.-% der Masse ausmachen.